Europäisches Patentamt

European Patent Office

Office européen des brevets

(11) Veröffentlichungsnummer: **0 548 460 A2**

## EUROPÄISCHE PATENTANMELDUNG

(21) Anmeldenummer: **92111857.6**

(22) Anmeldetag: **11.07.92**

(51) Int. Cl.5: **G10L 5/06**

(30) Priorität: **21.12.91 DE 4142717**

(43) Veröffentlichungstag der Anmeldung:
**30.06.93 Patentblatt 93/26**

(84) Benannte Vertragsstaaten:
**PT**

(71) Anmelder: **Deutsche Aerospace Aktiengesellschaft**
**Postfach 80 11 09**
**W-8000 München 80(DE)**
Anmelder: **Daimler-Benz Aktiengesellschaft**
**Postfach 80 02 30**
**W-7000 Stuttgart 80(DE)**

(72) Erfinder: **Class, Fritz, Dr.-Ing.**
**Nelkenweg 7**
**W-7436 Römerstein(DE)**
Erfinder: **Regel-Brietzmann, Peter, Dr.-Ing.**
**Promenade 9**
**W-7900 Ulm(DE)**
Erfinder: **Trottler, Karl, Dr.-Ing.**
**Im Knoblach 12**
**W-7916 Nersingen(DE)**

(74) Vertreter: **Amersbach, Werner, Dipl.-Ing.**
**AEG Aktiengesellschaft Patent- und Lizenzwesen Theodor-Stern-Kai 1**
**W-6000 Frankturt 70 (DE)**

(54) **Verfahren zur schnellen Sprecheradaption in einem Spracherkenner für grossen Wortschatz.**

(57) Die Erfindung betrifft ein Verfahren für die schnelle Sprecheradaption, das auf der Transformation von Merkmalsvektoren zweier Sprecher, des neuen, zu adaptierenden und des Referenzsprechers beruht. Dabei wird das Konzept der Merkmalsvektor-Transformation auf die Modellierung beim HMM-Erkenner übertragen, d.h. anstelle der Merkmalsvektoren des Referenzsprechers werden z.B. mehrdimensionale Normalverteilungen transformiert. Dadurch läßt sich nahezu die Erkennungsrate eines sprecherabhängigen Spracherkenners erreichen.

FIG. 2

EP 0 548 460 A2

Die Erfindung betrifft ein Verfahren zur schnellen Sprecheradaption nach dem Oberbegriff des Patentanspruchs 1.

Die Erfindung findet u.a. Verwendung bei der Spacherkennung über Telefon, z.B. für ein automatisches Bestellannahmesystem oder bei der Spracheingabe im Kraftfahrzeug.

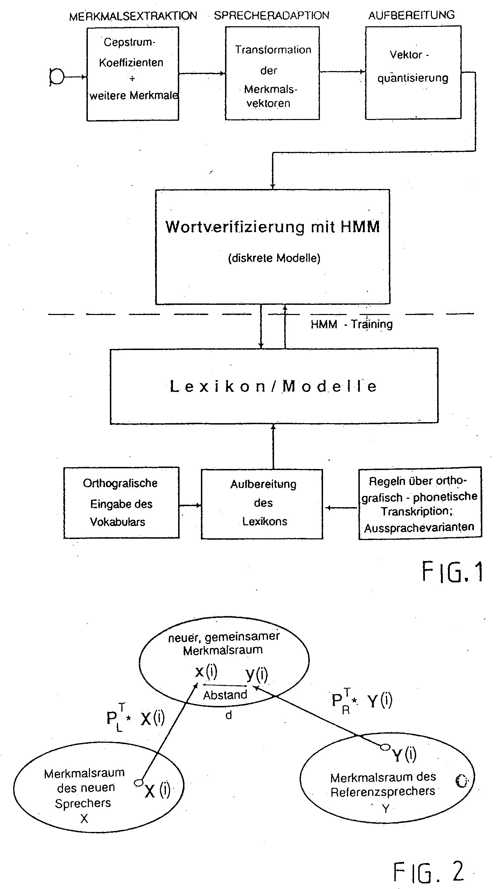

Die Anforderungen an heutige Spracherkennungssysteme beinhalten häufig die Forderung nach großem, leicht änder- oder erweiterbarem Vokabular. Für Anforderungen dieser Art setzt sich zunehmend das Prinzip der statistischen Modellierung von Wortuntereinheiten durch. Als Modelle für die Wortuntereinheiten (z.B. Laute, Phoneme, Diphone) werden dabei sog. Hidden Markov Modelle (HMM) verwendet. Ein auf diesem Prinzip basierendes Erkennungssystem ist im Blockschaltbild gemäß FIG. 1 dargestellt. Der Vorteil dabei ist, daß die Modellparameter der Wortuntereinheiten an Trainingsstichproben eines oder mehrerer Sprecher trainiert werden, unabhängig vom späteren Anwendungsvokabular. In der Anwendungsphase wird jedes in der entsprechenden Applikation zu erkennende Wort als Verkettung von Wortuntereinheiten dargestellt. Durch dieses Konzept ist mit relativ geringem Aufwand das Anwendungsvokabular modifizierbar. Der Hauptaufwand steckt in der Abschätzung der Modellparameter. Dies erfolgt in der Trainingsphase, die völlig entkoppelt von der Anwendungsphase ist und einmalig im Labor durchgeführt wird. Dazu ist bei dem Wortuntereinheiten-Konzept ein großer Stichprobenumfang erforderlich. Diese Trainingsstichproben müssen alle Wortuntereinheiten in möglichst verschiedenem Kontext enthalten, um die Modellparameter vernünftig abschätzen zu können.

Beim Training der Wortuntereinheiten können zwei Zielrichtungen verfolgt werden: entsprechend der vorgesehenen Anwendung können die Modellparameter für sprecher-unabhängige oder sprecher-adaptive Eingabe ausgelegt werden.

Ein sprecher-unabhängiges System ist dann erforderlich, wenn von einem Benutzer überhaupt keine - wenn auch noch so kurze - Trainingsphase verlangt werden kann. Das sprecher-adaptive System dagegen erfordert eine Adaptionsphase, in der wenige Wörter vorzusprechen sind, um das vortrainierte Erkennungssystem auf die neue Stimme zu adaptieren.

Für eine schnelle Sprecheradaption wurden mehrere Verfahren entwickelt und an einem DTW-Erkenner (Dynamic Time Warping) untersucht, die auf der Transformation von Merkmalsvektoren basieren (F. Class: Standardisierung von Sprachmustern durch vokabular-invariante Abbildungen zur Anpassung an Spracherkennungssysteme. Fortschrittberichte VDI, Reihe 10, Nr. 131; VDI-Verlag Düsseldorf). Das effizienteste dieser Verfahren beruht darauf, daß die Merkmalsvektoren des neuen Sprechers und die Merkmalsvektoren eines im System gespeicherten Referenzsprechers ("zweiseitige Transformation") so transformiert werden, daß sie im Mittel ähnlich sind.

Dieses Konzept läßt sich beim HMM-Erkenner nicht direkt einsetzen, da im Erkennungssystem keine Merkmalsvektoren des Referenzsprechers mehr vorhanden sind. Der herkömmliche HMM-Erkenner arbeitet vielmehr mit einer harten Vektorquantisierung, d.h. jedem einkommenden Merkmalsvektor wird durch Abstandsmessung ein Symbol zugeordnet. Nach der Vektorquantisierung liegt dadurch anstelle der Vektorfolge eine Symbolfolge vor. Daraus ergibt sich die prinzipielle Schwierigkeit für eine zweiseitige Transformation, daß im Erkennungssystem keine expliziten Merkmalsvektoren des Referenzsprechers vorhanden sind. Dieses Problem wurde dadurch gelöst, daß stellvertretend für die Merkmalsvektoren des Referenzsprechers die Codebuchcentroide transformiert werden.

Jüngste Untersuchungen (z.B. X.D. Huang, M.A. Jack: Semi-continuous hidden Markov models for speech signals. Computer Speech and Language, Vol. 3, 1989, S. 239-251. A.Kaltenmeier: Modellbasierte Worterkennung in Spracherkennungssystemen für großen Wortschatz. Fortschrittberichte VDI, Reihe 10, Nr. 174; VDI-Verlag Düsseldorf) haben gezeigt, daß durch den Einbau einer sog. "weichen Vektorquantisierung" (soft decision vectorquantization, SVQ) eine signifikante Verbesserung des HMM-Erkennungssystems möglich ist. Es wird dabei nicht mehr eine harte Zuordnung eines Merkmalsvektors zu einem Codebuchsymbol hergestellt, sondern die Zuordnung zu mehreren Symbolen mit unterschiedlicher Wahrscheinlichkeit. Der Einbau einer zweiseitigen Sprecheradaption, bereitet dabei aber Schwierigkeiten.

Die Aufgabe der Erfindung besteht darin, ein Verfahren für eine schnelle Sprecheradaption in einen Spracherkenner zu integrieren, der auf statistischer Modellierung des Sprachsignals basiert, derart, daß eine hohe Erkennungssicherheit erreicht wird.

Die Aufgabe wird gelöst durch die im kennzeichnenden Teil des Patentanspruchs 1 angegebenen Merkmale. Vorteilhafte Ausgestaltungen und/oder Weiterbildungen sind den Unteransprüchen zu entnehmen. Die Erfindung wird anhand von Ausführungsbeispielen beschrieben unter Bezugnahme auf schematische Zeichnungen.

Für die erfindungsgemäße Sprecheradaption wird das Verfahren der Transformation der Merkmalsvektoren verwendet. Es werden die Merkmalsvektoren des neuen Sprechers und eines Referenzsprechers in einen neuen gemeinsamen Merkmalsraum transformiert (sog. zweiseitige Transformation siehe FIG. 2). Zur Berechnung der erforderlichen Transformationsmatrizen muß der neue Sprecher einige vom System vorgegebene Wörter in einer Trainingsphase nachsprechen.

Als Erkenner wird ein HMM-Erkenner verwendet. Bei diesem Erkenner wird - in seiner einfachsten Form - eine laufende Folge von Merkmalsvektoren durch Vektorquantisierung an einem Codebuch in eine Symbolfolge umgewandelt. In der Verifikationsstufe wird dann eine Wahrscheinlichkeit für jedes Modell berechnet, daß dieses Modell die ankommende Symbolfolge erzeugt hat. Im Erkennersystem sind daher keine expliziten Merkmalsvektoren als Referenzvektoren vorhanden. Um das zweiseitige Sprecheradaptionsverfahren anwenden zu können, werden nun in vorteilhafter Weise anstelle der Merkmalsvektoren des Referenzsprechers die Centroidenvektoren des Codebuchs transformiert. Das Codebuch stellt dabei eine Quantisierung des Merkmalraums des Referenzsprechers dar. Die Centroidenvektoren sind die Mittelwerte für bestimmte Gebiete des Merkmalraumes des Referenzsprechers. Die Transformation des Codebuches entspricht also einer Transformation des quantisierten Merkmalraumes.

Weiterentwicklungen am HMM-System haben gezeigt, daß signifikante Verbesserungen möglich sind, wenn die harte Vektorquantisierung (HVQ) ersetzt wird durch eine weiche Vektorquantisierung (SVQ). Während bei der HVQ jeder Merkmalsvektor genau einem Codebuchsymbol zugeordnet wird, trifft die SVQ keine eindeutige Entscheidung. Es werden vielmehr Wahrscheinlichkeiten für mehrere mögliche Codebuchzellen ausgegeben, wobei die Summe dieser Wahrscheinlichkeiten 1 ist.

Um diese Wahrscheinlichkeiten berechnen zu können, muß der Merkmalraum - das Codebuch - durch Verteilungsannahmen modelliert werden; d.h. eine Sprecheradaption durch Transformation der Codebuch - Centroidenvektoren ist hier nicht mehr möglich, da diese Vektoren durch Verteilungsfunktionen ersetzt sind.

Um diese Art der Sprecheradaption in modifizierter Form einzusetzen, werden anstelle der Codebuch-Centroide die entsprechenden Verteilungen transformiert.

Um eine geeignete Verteilungsfunktion zu erhalten, ist es vorteilhaft, daß jede Codebuchzelle als n-dimensionale Normalverteilung approximiert wird. Im Zusammenhang mit dem HMM-Konzept wird dieses Verfahren mit dem Begriff "Semi-Continuous Hidden Markov Modelling (SCHMM) bezeichnet.

Die weiche Vektorquantisierung mit n-dimensionalen Normalverteilungen läßt sich am einfachsten in das HMM-System integrieren, indem das vorhandene Codebuch durch Normalverteilungen ersetzt wird; d.h. für jeden Codebuch-Centroidenvektor wird eine mehrdimensionale Normalverteilung eingesetzt. In einem Verfahrensschritt muß diese Normalverteilung abgeschätzt werden. Dazu wird mit einer herkömmlichen Methode ein Codebuch erzeugt. Dafür wird eine möglichst große Anzahl Sprachstichproben (Merkmalsvektoren) benötigt. Mit Hilfe des LBG-Algorithmus (Y. Linde, A. Buzo, M.Gray: An Algorithm for Vector Quantizer Design. IEEE Trans, Vol. Com-28, No. 1, 1980, S. 84-95) wird der Merkmalsraum in mehereren Schritten und Iterationen in die gewünschte Anzahl Gebiete eingeteilt. Nach der letzten Iteration liegt ein Codebuch vor, das durch die Centroidenvektoren repräsentiert ist.

Anschließend werden in einem zusätzlichen Schritt die benötigten Normalverteilungen bestimmt. Eine mehrdimensionale Normalverteilung hat die Form:

$$N(\vec{\mu}_1, K_1) = \frac{1}{\sqrt{(2\pi)^n \cdot \det K_\ell}} \cdot e^{-\frac{1}{2}(\vec{X}-\vec{\mu}_1)^T \cdot K_1^{-1} \cdot (\vec{X}-\vec{\mu}_1)} \qquad (1)$$

Darin ist:

1 = Ordnungsnummer der Normalverteilung; d.h. hier

1 = 1...L = Codebuchgröße (Anzahl Zellen bzw. Centroide)

$K_l = E[\vec{Y}\vec{Y}^T|l] - \vec{\mu}_l\vec{\mu}_l^T$ = Kovarianzmatrix der l-ten Verteilung;

Y = Merkmalsvektor des Referenzsprechers, für den die Verteilung abgeschätzt wurde;

$\vec{\mu}_l = E[\vec{Y}|l]$ = Mittelwertvektor (Centroid) der Zelle l;

$\vec{X}$ = Merkmalsvektor des neuen Sprechers.

Eine Normalverteilung ist bestimmt durch Mittelwertvektor und Kovarianzmatrix. Der Mittelwertvektor $\vec{\mu}_l$ ist nach der Codebuchgenerierung bekannt: es ist der jeweilige Centroidenvektor einer Zelle l. Die dazugehörige Kovarianzmatrix $K_l$ wird anschließend im letzten Schritt der Codebuchgenerierung unter Verwendung derjenigen Merkmalsvketoren $\vec{Y}$ geschätzt, die zur Zelle l gehören, d.h. deren Mittelwertvektor der Centroidenvektor $\vec{\mu}_l$ ist.

Damit werden im HMM-System anstelle des früheren Codebuchs L unterschiedliche, mehrdimensionale Normalverteilungen entsprechend Gl.1 verwendet. In der Anwendungsphase wird jeder ankommende Merkmalsvektor $\vec{X}$ an diesen Verteilungen klassifiziert. Es handelt sich dabei um einen Normalverteilungs- oder Bayesklassifikator für L Klassen und normalverteilte Merkmale. Die Prüfgröße für eine Klasse I ist die Verbundverteilungsdichte $p(\vec{X}|l)$ und entspricht der Bayes-Formel:

$$d_1 = P_1 \cdot p\ (\vec{X}|1) \qquad\qquad (2)$$

$P_l$ ist die Auftrittswahrscheinlichkeit der Klasse I. Wir nehmen an, daß alle Klassen gleich wahrscheinlich sind. Damit wird

$P_l = \frac{1}{L}.$    (3)

$p(\vec{X}|l)$ sind Wahrscheinlichkeitsdichtefunktionen. Sie haben hier die Form von Normalverteilungen nach Gl. 1.

In einem weiteren Verfahrensschritt wird nun die zweiseitige Sprecheradaption und die weiche Vektorquantisierung kombiniert. Das Prinzip der zweiseitigen Sprecheradaption ist in FIG. 2 dargestellt. Mit diesem Ansatz werden die Spektralcharakteristiken zweier Sprecher einander angepaßt. Da spektrale Sprecherunterschiede zum größten Teil in den einzelnen Merkmalsvektoren in Erscheinung treten, wird eine Sprecheranpassung durch Transformation der Merkmalsvektoren erreicht. Dazu werden die Merkmalsvektoren beider Sprecher - des neuen Sprechers (X) und des Referenzsprecher (Y) mit Hilfe linearer Transformation

$$\vec{X} = P_L^T \cdot \vec{X}, \quad \vec{Y} = P_R^T \cdot \vec{Y}$$

in einen neuen, gemeinsamen Merkmalsraum transformiert. Die Berechnung der Transformationsmatrizen $P_L$ und $P_R$ ist in "F. Class: Standardisierung von Sprachmustern durch vokabular-invariante Abbildungen zur Anpassung an Spracherkennungssysteme, Fortschrittberichte VDI, Reihe 10, Nr. 131; VDI-Verlag Düsseldorf" ausführlich beschrieben.

Die Transformation $P_L^T \cdot \vec{X}$ und $P_R^T \cdot \vec{Y}$ gemäß Fig. 2 werden in Gl. 1 eingearbeitet. Da die Berechnung der Transformationsvorschrift $P_L$, $P_R$ von mittelwertfreien Merkmalen ausgeht, ist eine Verschiebung der Merkmale im Merkmalsraum um die Mittelwerte vorgesehen:

$$E\ [\vec{X}] = \vec{\mu}_x \qquad\qquad (4)$$
$$E\ [\vec{Y}] = \vec{\mu}_y \qquad\qquad (5)$$

Die Transformation in dem neuen Merkmalsraum lautet dann für den Referenzsprecher

$$\tilde{\vec{y}} = P_R^T\ (\vec{Y} - \vec{\mu}_y) \qquad\qquad (6)$$

und für den neuen Sprecher

$$\tilde{\vec{x}} = P_L^T\ (\vec{X} - \vec{\mu}_x). \qquad\qquad (7)$$

Die zu den transformierten Vektoren gehörenden L Normalverteilungen haben dann folgende Mittelwertvektoren und Kovarianzmatrizen:

$$\tilde{\vec{\mu}}_1 = E\left[\tilde{\vec{y}} \mid 1\right] = E\left[P_R^T(\vec{Y} - \vec{\mu}_y) \mid 1\right] = P_R^T(\vec{\mu}_1 - \vec{\mu}_y) \qquad (8)$$

$$\begin{aligned}
\tilde{K}_1 &= E\left[(\tilde{\vec{y}} - \tilde{\vec{\mu}}_y)(\tilde{\vec{y}} - \tilde{\vec{\mu}}_y)^T \mid 1\right] \\
&= E\left[\left(P_R^T \cdot (\vec{Y} - \vec{\mu}_y) - P_R^T \cdot (\vec{\mu}_1 - \vec{\mu}_y)\right) \cdot (\tilde{\vec{y}} - \tilde{\vec{\mu}}_y)^T \mid 1\right] \qquad (9) \\
&= P_R^T \cdot E\left[(\vec{Y} - \vec{\mu}_1)(\vec{Y} - \vec{\mu}_1)^T \mid 1\right] \cdot P_R \\
&= P_R^T \cdot K_1 \cdot P_R
\end{aligned}$$

Die Kovarianzmatrix ist von dieser Verschiebung unabhängig. Für die benötigte Inverse der transformierten Kovarianzmatris folgt dann:

$$\tilde{K}_1^{-1} = (P_R^T \cdot K_1 \cdot P_R)^{-1} = P_R^{-1} \cdot K_1^{-1} \cdot P_R^{-T} \qquad (10)$$

Für eine transformierte Normalverteilung ergibt sich damit aus Gl.1:

$$\tilde{N}(\tilde{\vec{\mu}}_1, \tilde{K}_1) = \frac{1}{\sqrt{(2\pi)^n \cdot \det \tilde{K}_1}} \cdot e^{-\frac{1}{2}\tilde{H}} \qquad (11)$$

Fur den Exponenten der Normalverteilung wurde die Abkürzung

$$\tilde{H} = \left[P_L^T \cdot (\vec{X} - \vec{\mu}_x) - P_R^T \cdot (\vec{\mu}_1 - \vec{\mu}_y)\right]^T \cdot \tilde{K}_1^{-1} \cdot \left[P_L^T \cdot (\vec{X} - \vec{\mu}_x) - P_R^T \cdot (\vec{\mu}_1 - \vec{\mu}_y)\right] \qquad (12)$$

eingeführt. $\tilde{K}_l^{-1}$ ist die Inverse der transformierten Kovarianzmatrix der l-ten Verteilung.

Eine weitere Möglichkeit, die zweiseitige Sprecheradaption mit weicher Vektorquantisierung zu kombinieren, besteht darin, den linearen Ansatz zur Transformation der Merkmalsvektoren zu einem nichtlinearen - quadratischen - Ansatz zu erweitern. Das bedeutet, daß jeder Merkmalsvektor durch Bildung quadratischer Verknüpfungen der Komponenten erweitert wird. Aus einem primären Merkmalsvektor

$$\vec{X} = \left\{X_1, X_2, \ldots, X_n\right\} \qquad (13)$$

wird dann der erweitere Polynom-Vektor

$$\hat{\vec{X}} = \left\{X_1, X_2, \ldots X_n, X_1 \cdot X_1, X_1 \cdot X_2, \ldots, X_1 \cdot X_n, X_2 \cdot X_2, X_2 \cdot X_3, \ldots, X_n \cdot X_n\right\} \cdot \qquad (14)$$

Dieses Verfahren wird auf die Merkmalsvektoren des neuen und des Referenzsprechers angewendet. Die Berechnung der Transformationsmatrizen $P_L$ und $P_R$ erfolgt formal auf dieselbe Weise wie beim linearen Ansatz, nur mit entsprechend längeren Vektoren.

Untersuchungen haben gezeigt, daß die besten Ergebnisse zu erzielen sind, wenn ein Merkmalsvektor nach der Transformation wieder in der Dimension reduziert wird. Dies erfolgt durch Weglassen höherwertiger Komponenten. Der Grund liegt darin, daß bei diesem Verfahren die Lösung eines Eigenwertproblems dahintersteht. Die Vektorkomponenten sind deshalb nach der Transformation nach fallender Wichtigkeit geordnet. Damit leisten offensichtlich die höherwertigen Komponenten keinen Beitrag mehr zur Klassenunterscheidbarkeit.

Mit diesem nichtlinearen Ansatz lassen sich Sprecherunterschiede noch besser erfassen und angleichen. Die Erkennungsleistung des sprecheradaptiven Systems wird damit erheblich gesteigert und erreicht nahezu eine Erkennungsrate eines sprecherabhängigen Spracherkenners.

Das erfindungsgemäße Verfahren läßt sich mit verschiedenen Merkmalssätzen für die Merkmalsvektoren durchführen. Es können z.B. die aus dem Fourier-Spektrum abgeleiteten Kanallautstärke-Merkmale (mel-frequency Koeffizienten) oder die daraus transformierten mel-Cepstrahl-Koeffizienten verwendet werden. Einen weiteren Merkmalssatz erhält man aus dem LPC (linear predictive coding)- Spektrum. Ein aus diesen LPC-Koeffizienten aufgebauter Merkmalsvektor eignet sich ebenfalls für das erfindungsgemäße Verfahren. Auch dynamische Merkmale, etwa aus den mel-Cepstral-Koeffizienten durch die Regressionsgerade gewonnene Merkmale, sowie prosodische und artikulatorische Merkmale sind als Merkmalsvektoren verwendbar. Dabei können die verschiedenen Merkmale auch gleichzeitig verwendet werden.

Um den Rechenaufwand bei der Realisierung des SCHMM-Verfahrens zu verringern, ist es vorteilhaft, anstelle der vollen Kovarianzmatrix nur die Hauptdiagonalelemente der Kovarianzmatrix zu verwenden. Vorraussetzung dafür ist die Annahme der statischen Unabhängigkeit der beim Verfahren zugrundeliegenden Merkmale. Dies entspricht einer einfachen Gewichtung der Komponenten des Merkmalsvektors. Es tritt dadurch zwar eine geringfügige Verschlechterung von ca. o,5% in der Erkennungsrate auf, jedoch wird die technische Realisierung erheblich vereinfacht.

Desweiteren können anstelle der mehrdimensionalen Normalverteilung gemäß Gleichung 1 andere sphärisch invariante Verteilungen mit einer Verteilungsdichte der Form

$$p(\vec{X}/1) = f[(\vec{X}-\vec{\mu}_1)^T K_1^{-1}(\vec{X}-\vec{\mu}_1)]$$

verwendet werden, wobei die Funktion f an die Sprachsignale angepaßt wird.

**Patentansprüche**

1. Verfahren zur schnellen Anpassung eines neuen unbekannten Sprechers an ein vortrainiertes Spracherkennungssystem, das mit der statistischen Modellierung von Wortuntereinheiten (HMM-Erkenner) arbeitet, dadurch gekennzeichnet, daß die Spracheradaption mittels der Transformation der Merkmalsvektoren durchgeführt wird, wobei anstelle der quantisierten Merkmalsvektoren mehrdimensionale Verteilungsfunktionen transformiert werden.

2. Verfahren nach Anspruch 1, dadurch gekennzeichnet, daß die Merkmalsvektoren durch mehrdimensionale Gaußverteilungen dargestellt werden.

3. Verfahren nach Anspruch 1, dadurch gekennzeichnet, daß die Merkmalsvektoren durch sphärisch invariante Verteilungen dargestellt werden, die an die Sprachsignale angepaßt sind.

4. Verfahren nach einem der vorhergehenden Ansprüche, dadurch gekennzeichnet, daß die Merkmalsvektoren des neuen Sprechers X und des Referenzsprechers Y durch lineare Transformationen in einen neuen, gemeinsamen Merkmalsraum transformiert werden.

5. Verfahren nach einem der vorhergehenden Ansprüche 1 bis 3, dadurch gekennzeichnet, daß die Merkmalsvektoren des neuen Sprechers X und des Referenzsprechers Y nichtlinear zu einem Polynomvektor höheren Grades erweitert werden und daß diese erweiterten Merkmalsvektoren in den neuen, gemeinsamen Merkmalsraum transformiert werden.

6. Verfahren nach Anspruch 5, dadurch gekennzeichnet, daß die erweiteren Merkmalsvektoren nach der Transformation in den neuen, gemeinsamen Merkmalsraum auf ihre ursprüngliche Dimension verkürzt werden.

7. Verfahren nach einem der vorhergehenden Ansprüche, dadurch gekennzeichnet, daß anstelle der vollbesetzten inversen Kovarianzmatrix vor der Transformation in den neuen gemeinsamen Merkmalsraum lediglich deren Diagonalelemente verwendet werden.

8. Verfahren nach einem der vorhergehenden Ansprüche, dadurch gekennzeichnet, daß verschiedene Merkmalssätze aus dem Fourier- und/oder LPC-Spektrum und/oder dynamische Merkmale und/oder prosodische und/oder artikulatorische Merkmale gleichzeitig für die Merkmalsvektoren verwendet werden.

FIG. 1

FIG. 2